# EUROPEAN PATENT SPECIFICATION

(11) **EP 4 117 862 B1**
(45) Date of publication and mention of the grant of the patent: **28.01.2026**
(21) Application number: 21710950.3
(22) Date of filing: 08.03.2021
(51) Int. Cl.: B25B 27/00, B25B 27/02, B25B 27/30

(54) **KIT AND METHOD FOR REPAIRING A PUMPING INJECTOR**
WERKZEUGSATZ UND VERFAHREN ZUR REPARATUR EINES PUMPINJEKTORS
KIT ET PROCÉDÉ DE RÉPARATION D'UN INJECTEUR DE POMPAGE

(30) Priority: 09.03.2020 GB 202003393
(43) Date of publication of application: 18.01.2023
(73) Proprietor: PHINIA Delphi Luxembourg SARL, 4367 Belvaux (LU)
(72) Inventor: WADSWORTH, Nick, Coventry CV7 7EQ (GB); FABER, Guillaume, 41000 Blois (FR)
(74) Representative: Office Freylinger
(86) International application number: PCT/EP2021/055808
(87) International publication number: WO 2021/180661

(56) References cited:
- CN-A- 104 440 787
- CN-A- 110 497 352
- KR-B1- 100 728 931
- KR-U- 20100 002 980
- US-A- 4 780 942
- US-A- 5 014 409

## Description

### FIELD OF THE INVENTION

The present disclosure concerns after sales tooling to repair automotive diesel pumping injectors and more precisely concerns a removal tool for removing a thrust socket of a pumping injector in order to check, clean or replace such part and other parts such as a pumping plunger.

The disclosure also concerns a tool kit incorporating such removal tool and mounting tools to put a thrust socket back in place.

### BACKGROUND OF THE INVENTION

Heavy-duty pumping injector comprises a thrust socket receiving a pusher of the engine in order to compress the thrust socket in an inward direction and actuate a pumping plunger in the injector. The thrust socket is forced in a backward direction by a spiral return spring through a retainer cup assembly.

In order to reduce the manufacturing cost of the injector, the thrust socket is held in position in the retainer cup assembly with a flat coiled spring ring that it is not possible to remove easily. A tool according to the preamble of claim 1 can be seen in document CN 104 440 787 A.

### SUMMARY OF THE INVENTION

In view of the situation, and in order to reduce aftersales costs, there is a need for a tooling that permits to remove the spring ring in order to dismount the thrust socket and the present disclosure proposes a tool kit comprising a removal tool for removing a thrust socket of a pumping injector, said thrust socket being received in a retainer cup and attached to said retainer cup through a coiled flat annular spring ring lying in a plane perpendicular to a main axis of said thrust socket and received in an annular groove of an inner wall of said retainer cup where said removal tool comprises a holding shaft having a first end in a longitudinal axis direction, said first end being provided with a spring ring removal device, said spring ring removal device comprising a stem lying in said longitudinal axis direction and provided at a distal end with a hook for catching said spring ring, said removal device being sized to pass in a tubular gap between a head of said thrust socket and a tubular wall of said retainer cup and sized to be able to rotate about said axial direction when inserted between said head and said wall.

The removal tool is adapted to compress the coils of the coiled flat annular spring ring in order to extract it from a groove in the retainer cup which permits to move the spring ring and thrust socket out of the retainer cup.

In realization modes which may be combined or alternate:
A thickness of the stem is adapted to allow the stem to rotate around an axis parallel to axis A in the gap and a thickness of the hook is adapted for catching an end of said spring ring and for grabbing and lifting coils of said spring ring out of said tubular gap through a rotational movement of said stem around said spring ring when said hooked distal end is engaged under said end of said flat spring ring.

The stem may be attached to the holding shaft through a support plate provided with a shoulder cooperating with an annular end surface of said cup for guiding the stem in the tubular gap.

The support plate may be attached on said holding shaft.

The support plate may comprise at least one reinforcing rib parallel to said longitudinal axis direction.

The stem may be an extension of the support plate.

Said first end of said shaft may define a push surface for pushing said thrust socket inwards said cup and release tension on said spring ring.

According to the Invention, the tool kit further comprises a flat coil spring mounting tool set comprising:
- an annular guide block having an axial bore with a funnel shaped inner wall and a lower locating collar for securing said annular guide block on a top part of said cup with a reduced diameter wall end of said axial bore positioned flush with an inner surface of said tubular wall;
- a tubular spring pusher having a tubular wall provided for entering in the funnel shaped axial bore and entering in the tubular gap between the head of said thrust socket and the tubular wall of said retainer cup.

The disclosure concerns also a process for repairing an injector comprising a process for removing a spring ring and thrust socket with a removal tool of the disclosure, comprising inserting the removal device of the removal tool in the tubular gap between the tubular wall of the retainer cup and the head of the thrust socket, catching an end of an upper coil of the coiled flat annular spring ring with the hook, rotating the removal device around the holding shaft longitudinal axis inside the tubular gap to have the stem pass between the tubular wall and a side of the spring ring at said end, turning the removal tool around the spring ring and lifting coils of said spring ring to remove the spring ring and thrust socket.

The process for repairing an injector further comprises a process for inserting a coiled flat annular spring ring with a mounting tool set disclosed above comprising pushing a coiled flat annular spring ring with the tubular spring pusher in a locking position of the thrust socket through pushing said spring with said tubular spring pusher inside the funnel shaped bore of the guide block for contracting said spring ring and pushing further the contracted spring ring further in said cup into its locking position within said annular groove in said tubular wall.

### BRIEF DESCRIPTION OF THE DRAWINGS

A detailed description of exemplary embodiments of the invention will be discussed hereunder in reference to the attached drawings where:
Figure 1: a side view with partial cut of an injector according to the disclosure.
Figure2: a cut view of a detail of figure 1;
Figure 3: A perspective view of a removal tool of the disclosure;
Figure 4: a perspective cut view of a detail of the injector with the tool of figure 3 in a working position;
Figure 5: a perspective view of the tool of figure 3 in a working position on the top of an injector;
Figure 6: a perspective view with cut of a spring mounting tool set above the top of an injector.

### DETAILED DESCRIPTION OF EMBODIMENTS OF THE INVENTION

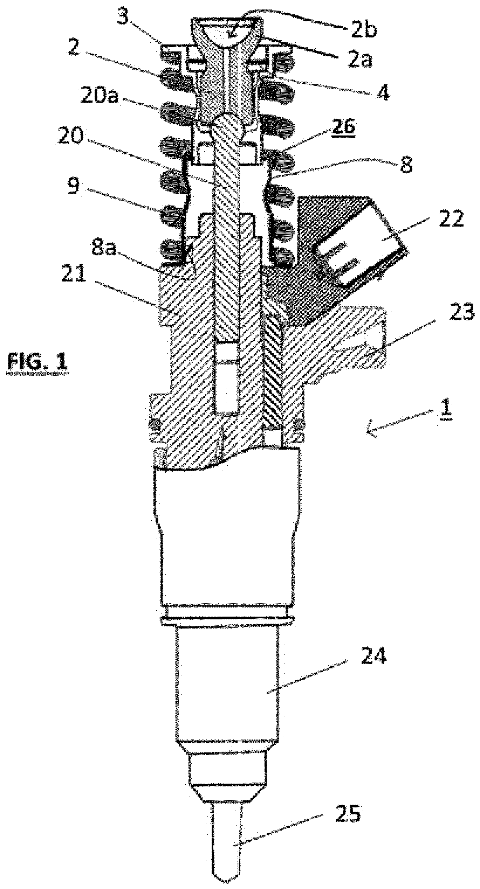

The present invention concerns maintenance of an injector pump as disclosed in figure 1 and known in the art. Such an injector comprises, from the bottom to the top according to the drawing orientation, a nozzle 25 for injecting fuel in an engine cylinder not shown, a nozzle body holding the nozzle and incorporating a solenoid actuator not shown to let fuel enter the nozzle at certain timing when driven by an electric current provide through an electric connector 22.

In the upper part of the injector a high pressure pumping system is provided in order to provide high pressure fuel in an injection circuit of the engine through the high pressure fluid connector 23 with a plunger member 20 which reciprocates in a main injector body 21. The plunger member is cyclically pushed downwardly by a thrust socket 2 actuated by a mechanical pusher not shown of the engine. The mechanical pusher is received in a top recess 2b of the thrust socket. The plunger member 20 and thrust socket 2 are moved back upwards by a return spring 9. A retention assembly made of a retainer cup 3, a spring retainer 8 held together with a retaining ring 26 preloads the return spring 9. The spring retainer 8 is attached to the injector body with tabs 8a pushed over a locating ridge of the injector body.

The retainer cup has a longitudinal bore receiving the thrust socket, such longitudinal bore having a tubular upper part with a tubular wall 3b.

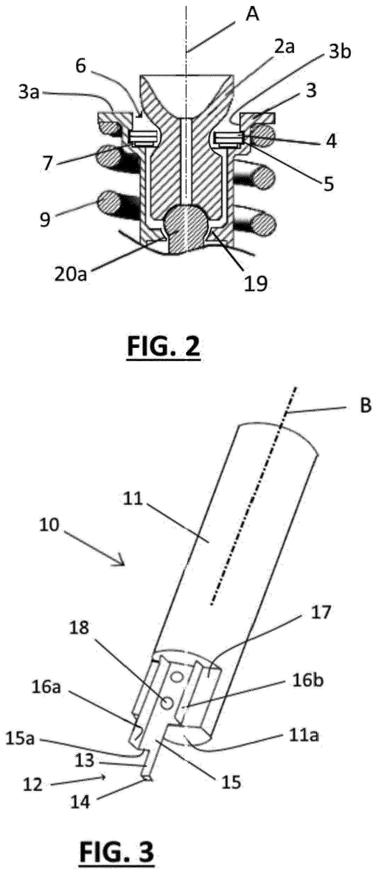

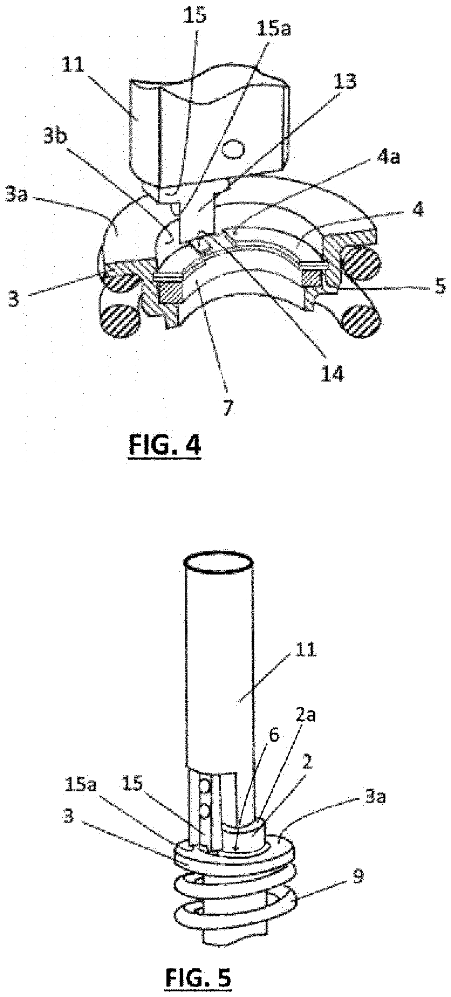

As better seen in figure 2, the thrust socket 2 is held in the retainer cup 3 thanks to a coiled flat annular spring ring 4 which is received in a groove 5 of the tubular wall 3b of the retainer cup 3 as represented in figure 4. It should be noted that there remains a slight play between the interior diameter of the coiled flat annular spring ring 4 and the thrust socket central part which allows compressing the coils of such spring ring inwardly. It also should be noted that the coiled flat annular spring ring (hereafter spring ring) is shown in figures 2 and 4 with approximately 1,8 coils but may comprise two coils or more than two coils.

Contrary to a standard circlip who could be removed with generic tools, the spring ring having several coils makes it impossible to remove with standard clip removal tools.

The spring ring 4 is lying in a plane perpendicular to a main axis A of the thrust socket and received in the annular groove 5 of the inner wall 3b of said retainer cup. A spacer 7 is located under the spring ring 4. A bottom part of the retainer cup comprises a support element 19 for a head 20a of the plunger the support element is made of a circular wall of a hole in the retainer cup forming a socket for the ball shaped head 20a of the plunger 20.

In this configuration, removing the thrust socket 2 above the plunger implies to have an access to the spring ring 4, compress such and remove it in a very constrained area as the diametrical clearance between the thrust socket head 2a and the inner diameter of the spring guide 3b is only 1.3mm with the trust socket in a central position which causes the gap 6 between the retainer cup and the head of the thrust socket to be in the millimeter range.

According to the disclosure, a removal tool 10 shown in figure 3 has a specific shape to be introduced inside the gap 6 to compress the clip from the external diameter to the center with circular movement.

This tool 10 comprises a holding shaft 11 having a first end 11 in a longitudinal axis direction B, said first end being provided with a spring ring removal device 12.

The spring ring removal device comprises a stem 13 lying in said longitudinal axis direction and provided at a distal end with a hook 14 for catching said spring ring 4, said removal device being sized to pass in the tubular gap 6 between the head 2a of said thrust socket and a tubular wall 3b of said retainer cup and sized to be able to rotate about said axial direction when inserted between said head and said wall with said axial direction parallel to said main axis A of said thrust socket.

Back to figure 3, in the example shown, the stem 13 is attached to the holding shaft 11 through a support plate 15 provided with a shoulder 15a which may cooperate with an annular end surface 3a of the cup 3 for guiding the stem 13 in the tubular gap 6 as can be seen in figure 4. The stem 13 is unitary with the support plate 15 but could be attached to such plate.

The support plate 15 is attached on said holding shaft with screws 18 or other means such as rivets and comprises one or more reinforcing ribs 16a, 16b parallel to said longitudinal axis direction.

Figure 4 shows a position of the removal device 12 in the gap with the thrust socket removed for better understanding and figure 5 shows the complete tool with the removal device inserted in such gap 6.

A thickness of the stem 13 is adapted to allow the stem to rotate around an axis parallel to axis A in the gap and a thickness of the hook 14 is adapted for catching an end 4a of said spring ring 4.

The removal device 12 can then grab and lift coils of said spring ring out of said tubular gap through a rotational movement of said stem around said spring ring when said hooked distal end is engaged under said end of said spring ring.

In use, the removal tool is positioned on the injector hear with its axis B close to parallel to the main axis A of the injector.

In addition and as seen in figure 5, the first end 11a of the shaft 11 shown in figure 3 defines a push surface for pushing said thrust socket inwards said cup and release tension on the spring ring.

The removal tool 10 with its specific shape is introduced inside the gap to compress the spring ring coils and remove them from their receiving groove with a circular movement around the thrust socket.

By this way, the spring ring is removed and the thrust socket may be removed to be cleaned or replaced.

This tool does not generate any debris or risk to damage the body of the injector.

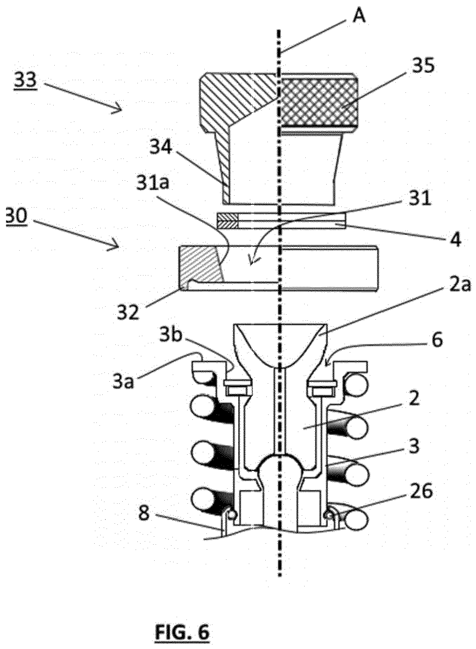

To provide a complete tool kit, the removal tool is associated with a coiled flat annular spring ring mounting tool set shown in figure 6 and comprising:
- an annular guide block 30 having an axial bore 31 with a funnel shaped inner wall 31 and a lower locating collar 32. The lower locating collar 32 permits to secure the annular guide block on a top part 3a of the cup 3 while the head of the thrust socket enters the axial bore.

The reduced diameter wall end of the funnel shaped axial bore has a same diameter than the inner surface of wall 3b of the cup so in order to be positioned flush with an inner surface of the tubular wall 3b. A the other extremity of the annular guide block, the funnel shape starts with a diameter larger than the diameter of the spring ring 4 and is reduced until it reaches the diameter of the wall 3b of the retainer cup in order to permit compressing said spring ring through reducing the diameter of its coils while pushing it through the funnel shaped bore to reach the diameter of the retainer cup internal diameter and insert such ring in such retainer cup easily.

In alternate designs, the reduced diameter of the funnel shape may be a little smaller than the retainer cup internal diameter to provide clearance and avoid a step between the guide block and cup.

Pushing of the spring ring is done with a tubular spring pusher 33 having a tubular wall 34 provided for entering in the funnel shaped axial bore 31 and the tubular gap 6 between the head 2a of the thrust socket and the tubular wall 3b of the retainer cup 3.

The tubular spring pusher provides insertion of a new spring ring in a locking position of the thrust socket through pushing said spring with said tubular spring pusher 33 inside the funnel shaped bore 31 of the guide block 30 for contracting the spring ring and pushing said contracted spring ring further in said cup until it expands in its locking position within the annular groove 5 in the tubular wall 3b.

The tubular spring pusher is provided with a knurled holding area to provide a good grip for pushing and turning the spring pusher to ease insertion of the spring ring in position.

A process for removing the spring ring and thrust socket comprises inserting the removal device 12 in the tubular gap 6 between the tubular wall 3b of the retainer cup 3 and the head 2a of the thrust socket, catching an end of an upper coil of the coiled flat annular spring ring with the hook, rotating the removal device around the holding shaft longitudinal axis inside the tubular gap to have the stem pass between the tubular wall and a side of the spring ring at said end, turning the removal tool around the spring ring and lifting coils of said spring ring to remove the spring ring 4 and thrust socket 2.

After the thrust socket is removed, a repair process steps may comprise controlling the parts such as thrust socket and plunger, cleaning or replacing such parts. The repair process may end with mounting new or the formers thrust socket and spring ring by positioning said thrust socket in place inside the retainer cup, positioning the annular guide block on the top of the retainer cup, inserting the spring ring in the funnel shaped bore of the annular guide block, pushing the spring ring inside the retainer cup using the spring pusher until the spring ring locks in the groove in the inner tubular wall 3b of the cup 3.

The invention is not limited to the above described example and for example the holding shaft may be knurled or ergonomically shaped without departing from the invention, which is disclosed in the appended claims.

### LIST OF REFERENCES

- 1 -: Pumping injector
- 2 -: Thrust socket
- 2a -: Head of the thrust socket
- 2b -: Top recess of the thrust socket
- 3 -: Retainer cup
- 3a -: Annular end surface
- 3b -: Tubular wall
- 3c -: Support
- 4 -: Coiled flat annular spring ring
- 5 -: Annular groove
- 6 -: Tubular gap
- 7 -: Spacer
- 8 -: Spring retainer
- 8a -: Tab
- 9 -: Return spring
- 10 -: Removal tool
- 11 -: Shaft
- 11a -: first end of shaft
- 12 -: Spring ring removal device
- 13 -: Stem
- 14 -: Hook
- 15 -: Support plate
- 15a -: Shoulder
- 16a, 16b -: Reinforcing ribs
- 17 -: Mounting face
- 18 -: Mounting screws
- 19 -: Support
- 20 -: Plunger member
- 20a -: Head of plunger member
- 21-: Injector body
- 22 -: Connector
- 23 -: High pressure fluid connector
- 24 -: Nozzle body
- 25 -: Nozzle
- 26 -: Retaining ring
- 30 -: Annular guide block
- 31-: Axial bore
- 31a -: funnel shaped wall
- 32 -: Lower locating collar
- 33 -: Spring pusher
- 34 -: Tubular wall of spring pusher
- 35 -: Knurled head

## Claims

1. Tool kit comprising a removal tool (10) for removing a thrust socket (2) of a pumping injector (1), said thrust socket (2) being received in a retainer cup (3) and attached to said retainer cup (3) through a coiled flat annular spring ring (4) lying in a plane perpendicular to a main axis (A) of said thrust socket and received in an annular groove (5) of an inner wall of said retainer cup, wherein said removal tool comprises a holding shaft (11) having a first end (11a) in a longitudinal axis (B) direction, said first end being provided with a spring ring removal device (12), said removal device comprising a stem (13) lying in said longitudinal axis direction and provided at a distal end with a hook (14) for catching said spring ring (4), said removal device being sized to pass in a tubular gap (6) between a head (2a) of said thrust socket and a tubular wall (3b) of said retainer cup and sized to be able to rotate about said axial direction when inserted between said head and said wall; **characterised in** further comprising a coiled flat annular spring ring mounting tool set comprising:
- an annular guide block (30) having an axial bore (31) with a funnel shaped inner wall (31a) and a lower locating collar (32) for securing said annular guide block on a top part of said cup with a reduced diameter wall end of said axial bore positioned flush with an inner surface of said tubular wall (3b);
- a tubular spring pusher (33) having a tubular wall (34) provided for entering in the funnel shaped axial bore (31) and for entering in the tubular gap (6) between the head (2a) of said thrust socket and the tubular wall (3b) of said retainer cup.

2. Tool kit according to claim 1 wherein a thickness of the stem (13) allows the stem to rotate around an axis parallel to axis A in the gap and a thickness of the hook (14) is adapted for catching an end (4a) of said spring ring (4) and for grabbing and lifting coils of said spring ring out of said tubular gap through a rotational movement of said stem around said spring ring when said hooked distal end is engaged under said end of said spring ring.

3. Took kit according to claim 1 or 2, wherein said stem (13) is attached to said holding shaft (11) through a support plate (15) provided with a shoulder (15a) cooperating with an annular end surface (3a) of said cup (3) for guiding the stem (13) in the tubular gap (6).

4. Tool kit according to claim 3, wherein said support plate (15) is attached on said holding shaft and comprises at least one reinforcing rib (16a, 16b) parallel to said longitudinal axis direction.

5. Tool kit according to claim 3 or 4, wherein said stem (13) is an extension of said support plate (15).

6. Tool kit according to any one of claims 1 to 5, wherein said first end (11a) of said shaft (11) defines a push surface for pushing said thrust socket inwards said cup and release tension on said flat spring.

7. Process for repairing an injector comprising a process for removing a spring ring and thrust socket with a tool kit according to any one of claims 1 to 6 comprising inserting the removal device (12) of the removal tool in the tubular gap (6) between the tubular wall (3b) of the retainer cup and the head (2a) of the thrust socket, catching an end of an upper coil of the coiled flat annular spring ring (4) with the hook (14), rotating the removal device around the holding shaft longitudinal axis inside the tubular gap to have the stem pass between the tubular wall and a side of the spring ring at said end, turning the removal tool around the spring ring and lifting coils of said spring ring to remove the spring ring (4) and thrust socket (2); and further comprising a process for inserting a coiled flat annular spring ring with a mounting tool set as per claim 1 comprising pushing a coiled flat annular spring ring with the tubular spring pusher (33) in a locking position of the thrust socket through pushing said spring with said tubular spring pusher (33) inside the funnel shaped bore (31) of the guide block (30) for contracting said spring ring and pushing further the contracted spring ring further in said cup into its locking position within said annular groove (5) in said tubular wall.

## Patentansprüche

1. Werkzeugsatz, umfassend ein Abnahmewerkzeug (10) zum Abnehmen einer Druckbuchse (2) eines Pumpinjektors (1), wobei die Druckbuchse (2) in einer Haltetasse (3) aufgenommen und an der Haltetasse (3) durch einen gewickelten, flachen ringförmigen Federring (4) angebracht ist, der in einer Ebene senkrecht zu einer Hauptachse (A) der Druckbuchse liegt und in einer ringförmigen Nut (5) einer Innenwand der Haltetasse aufgenommen ist, wobei das Abnahmewerkzeug einen Halteschaft (11) mit einem ersten Ende (11a) in Richtung einer Längsachse (B) umfasst, wobei das erste Ende mit einer Federring-Abnahmevorrichtung (12) versehen ist, wobei die Abnahmevorrichtung einen Stiel (13) umfasst, der in der Längsachsenrichtung liegt und an einem distalen Ende mit einem Haken (14) zum Ergreifen des Federrings (4) versehen ist, wobei die Abnahmevorrichtung so bemessen ist, dass sie in einen rohrförmigen Spalt (6) zwischen einem Kopf (2a) der Druckbuchse und einer rohrförmigen Wand (3b) der Haltetasse hineingeht und so bemessen ist, dass sie in der Lage ist, sich um die axiale Richtung zu drehen, wenn sie zwischen den Kopf und die Wand eingeführt wird; **dadurch gekennzeichnet, dass** er ferner ein Montagewerkzeug für einen gewickelten, flachen ringförmigen Federring umfasst, umfassend:
- einen ringförmigen Führungsblock (30) mit einer axialen Bohrung (31) mit einer trichterförmigen Innenwand (31a) und einem unteren Positionierkragen (32) zum Sichern des ringförmigen Führungsblocks auf einem oberen Teil der Tasse mit einem Wandende der axialen Bohrung mit verringertem Durchmesser, die bündig mit einer Innenfläche der rohrförmigen Wand (3b) positioniert ist;
- einen rohrförmigen Federschieber (33) mit einer rohrförmigen Wand (34), die dafür vorgesehen ist, in die trichterförmige axiale Bohrung (31) einzutreten und in den rohrförmigen Spalt (6) zwischen dem Kopf (2a) der Druckbuchse und der rohrförmigen Wand (3b) der Haltetasse einzutreten.

2. Werkzeugsatz nach Anspruch 1, wobei es eine Dicke des Stiels (13) dem Stiel ermöglicht, sich um eine Achse parallel zur Achse A im Spalt zu drehen, und eine Dicke des Hakens (14) dazu geeignet ist, ein Ende (4a) des Federrings (4) zu ergreifen und Wicklungen des Federrings aufzunehmen und durch eine Drehbewegung des Stiels um den Federring aus dem rohrförmigen Spalt anzuheben, wenn das mit Haken versehene distale Ende unter dem Ende des Federrings im Eingriff ist.

3. Werkzeugsatz nach Anspruch 1 oder 2, wobei der Stiel (13) durch eine Stützplatte (15) an dem Halteschaft (11) angebracht ist, die mit einem Absatz (15a) versehen ist, der mit einer ringförmigen Endfläche (3a) der Tasse (3) zum Führen des Stiels (13) in dem rohrförmigen Spalt (6) zusammenwirkt.

4. Werkzeugsatz nach Anspruch 3, wobei die Stützplatte (15) an dem Halteschaft angebracht ist und mindestens eine Verstärkungsrippe (16a, 16b) parallel zu der Längsachsenrichtung umfasst.

5. Werkzeugsatz nach Anspruch 3 oder 4, wobei der Stiel (13) eine Verlängerung der Stützplatte (15) ist.

6. Werkzeugsatz nach einem der Ansprüche 1 bis 5, wobei das erste Ende (11a) des Schafts (11) eine Schubfläche zum Schieben der Druckbuchse nach innen zur Tasse und zum Lösen einer Spannung auf der Blattfeder definiert.

7. Prozess zum Reparieren eines Injektors, umfassend einen Prozess zum Abnehmen eines Federrings und einer Druckbuchse mit einem Werkzeugsatz nach einem der Ansprüche 1 bis 6, umfassend das Einführen der Abnahmevorrichtung (12) des Abnahmewerkzeugs in den rohrförmigen Spalt (6) zwischen die rohrförmige Wand (3b) der Haltetasse und den Kopf (2a) der Druckbuchse, das Ergreifen eines Endes einer oberen Wicklung des gewickelten flachen ringförmigen Federrings (4) mit dem Haken (14), das Drehen der Abnahmevorrichtung um die Längsachse des Halteschafts innerhalb des rohrförmigen Spalts, so dass der Stiel zwischen die rohrförmige Wand und eine Seite des Federrings an dem Ende hindurchgeht, das Drehen des Abnahmewerkzeugs um den Federring und das Anheben von Wicklungen des Federrings, um den Federring (4) und die Druckbuchse (2) zu entfernen; und ferner umfassend einen Prozess zum Einführen eines gewickelten flachen ringförmigen Federrings mit einem Montagewerkzeug nach Anspruch 1, umfassend das Schieben eines gewickelten flachen ringförmigen Federrings mit dem rohrförmigen Federschieber (33) in eine Verriegelungsposition der Druckbuchse durch Schieben der Feder mit dem rohrförmigen Federschieber (33) in die trichterförmige Bohrung (31) des Führungsblocks (30) zum Zusammenziehen des Federrings und weiteres Schieben des zusammengezogenen Federrings in die Tasse in ihre Verriegelungsposition innerhalb der ringförmigen Nut (5) in der rohrförmigen Wand.

## Revendications

1. Kit d'outils comprenant un outil de retrait (10) pour retirer une douille de butée (2) d'un injecteur de pompage (1), ladite douille de butée (2) étant reçue dans une coupelle de retenue (3) et fixée à ladite coupelle de retenue (3) à travers une bague à ressort annulaire plate enroulée (4) se trouvant dans un plan perpendiculaire à un axe principal (A) de ladite douille de butée et reçue dans une rainure annulaire (5) d'une paroi interne de ladite coupelle de retenue, dans lequel ledit outil de retrait comprend un arbre de maintien (11) présentant une première extrémité (11a) dans une direction d'axe longitudinal (B), ladite première extrémité étant pourvue d'un dispositif de retrait de bague à ressort (12), ledit dispositif de retrait comprenant une tige (13) se trouvant dans ladite direction d'axe longitudinal et pourvue au niveau d'une extrémité distale d'un crochet (14) pour la prise de ladite bague à ressort (4), ledit dispositif de retrait étant dimensionné pour passer dans un interstice tubulaire (6) entre une tête (2a) de ladite douille de butée et une paroi tubulaire (3b) de ladite coupelle de retenue et dimensionné pour pouvoir tourner autour de ladite direction axiale lorsqu'il est inséré entre ladite tête et ladite paroi ; **caractérisé en ce qu'**il comprend en outre un ensemble d'outils de montage de bague à ressort annulaire plate enroulée comprenant :
- un bloc de guidage annulaire (30) présentant un alésage axial (31) avec une paroi interne en forme d'entonnoir (31a) et un collier de positionnement inférieur (32) pour fixer ledit bloc de guidage annulaire sur une partie supérieure de ladite coupelle avec une extrémité de paroi de diamètre réduit dudit alésage axial positionnée de manière à affleurer une surface interne de ladite paroi tubulaire (3b) ;
- un poussoir de ressort tubulaire (33) présentant une paroi tubulaire (34) destinée à entrer dans l'alésage axial en forme d'entonnoir (31) et à entrer dans l'interstice tubulaire (6) entre la tête (2a) de ladite douille de butée et la paroi tubulaire (3b) de ladite coupelle de retenue.

2. Kit d'outils selon la revendication 1, dans lequel une épaisseur de la tige (13) permet à la tige de tourner autour d'un axe parallèle à l'axe A dans l'interstice et une épaisseur du crochet (14) est adaptée pour la prise d'une extrémité (4a) de ladite bague à ressort (4) et pour saisir et soulever des spires de ladite bague à ressort hors dudit interstice tubulaire par un mouvement de rotation de ladite tige autour de ladite bague à ressort lorsque ladite extrémité distale à crochet est engagée sous ladite extrémité de ladite bague à ressort.

3. Kit d'outils selon la revendication 1 ou 2, dans lequel ladite tige (13) est fixée audit arbre de maintien (11) à travers une plaque de support (15) pourvue d'un épaulement (15a) coopérant avec une surface d'extrémité annulaire (3a) de ladite coupelle (3) pour guider la tige (13) dans l'interstice tubulaire (6).

4. Kit d'outils selon la revendication 3, dans lequel ladite plaque de support (15) est fixée sur ledit arbre de maintien et comprend au moins une nervure de renfort (16a, 16b) parallèle à ladite direction d'axe longitudinal.

5. Kit d'outils selon la revendication 3 ou 4, dans lequel ladite tige (13) est une extension de ladite plaque de support (15).

6. Kit d'outils selon l'une quelconque des revendications 1 à 5, dans lequel ladite première extrémité (11a) dudit arbre (11) définit une surface de poussée pour pousser ladite douille de butée vers l'intérieur de ladite coupelle et relâcher la tension sur ledit ressort plat.

7. Procédé de réparation d'un injecteur comprenant un procédé de retrait d'une bague à ressort et d'une douille de butée avec un kit d'outils selon l'une quelconque des revendications 1 à 6, comprenant l'insertion du dispositif de retrait (12) de l'outil de retrait dans l'interstice tubulaire (6) entre la paroi tubulaire (3b) de la coupelle de retenue et la tête (2a) de la douille de butée, la prise d'une extrémité d'une spire supérieure de la bague à ressort annulaire plate enroulée (4) avec le crochet (14), la rotation du dispositif de retrait autour de l'axe longitudinal de l'arbre de maintien à l'intérieur de l'interstice tubulaire pour faire passer la tige entre la paroi tubulaire et un côté de la bague à ressort au niveau de ladite extrémité, la rotation de l'outil de retrait autour de la bague à ressort et le soulèvement des spires de ladite bague à ressort pour retirer la bague à ressort (4) et la douille de butée (2) ; et comprenant en outre un procédé d'insertion d'une bague à ressort annulaire plate enroulée avec un ensemble d'outils de montage selon la revendication 1, comprenant la poussée d'une bague à ressort annulaire plate enroulée avec le poussoir de ressort tubulaire (33) dans une position de verrouillage de la douille de butée par poussée dudit ressort avec ledit poussoir de ressort tubulaire (33) à l'intérieur de l'alésage en forme d'entonnoir (31) du bloc de guidage (30) pour contracter ladite bague à ressort et pousser davantage la bague à ressort contractée dans ladite coupelle dans sa position de verrouillage à l'intérieur de ladite rainure annulaire (5) dans ladite paroi tubulaire.
